# EUROPEAN PATENT APPLICATION

(11) **EP 2 484 507 A1**
(43) Date of publication of application: **08.08.2012**
(21) Application number: 10820306.8
(22) Date of filing: 06.09.2010
(51) Int. Cl.: B29C 45/26, B29C 45/00, B29C 45/40, G02B 1/04, B29L 11/00

(54) **DEVICE FOR MANUFACTURING RESIN MOLDED ARTICLES FOR USE IN OPTICAL ELEMENTS, AND METHOD FOR MANUFACTURING OPTICAL ELEMENTS**

(30) Priority: 30.09.2009 JP 2009226197
(71) Applicant: Konica Minolta Opto, Inc., Hachioji-shi, Tokyo 192-8505 (JP)
(72) Inventor: TAKAGI Hiroshi, Hachioji-shi Tokyo 192-8505 (JP); HARA Shinichiro, Hachioji-shi Tokyo 192-8505 (JP); MATSUMOTO Yasuhiro, Hachioji-shi Tokyo 192-8505 (JP); KANEKO Naoki, Hachioji-shi Tokyo 192-8505 (JP)
(74) Representative: Henkel, Breuer & Partner
(86) International application number: PCT/JP2010/065211
(87) International publication number: WO 2011/040186

(57) **Abstract**

Abstract: Disclosed is a device for manufacturing resin molded articles for use in optical elements. Said device is provided with: a first mold, which is fixed in place; a second mold that has, on a cavity mold surface, a transfer surface for transferring an optical surface to a molten resin injected into the cavity; a nozzle for injecting a fluid under pressure into the molten resin injected into the cavity, thereby forming a void inside said molten resin; and an ejector pin that is provided in the second mold, protruding from the mold surface thereof, to release a base material from the mold surface. The nozzle is provided on a part of the cavity mold surface other than the transfer surface of the second mold and has a tip formed so as to protrude from the mold surface into the cavity. The ejector pin protrudes at a position between a position corresponding to the tip of the base material nozzle and the end of the aforementioned optical surface on the side on which the tip of the nozzle is disposed.

## Description

### TECHNICAL FIELD

The present invention relates to a device for manufacturing resin molded articles used for optical elements, and a method for manufacturing said optical elements, and in particular, to a device for manufacturing molded articles used for optical elements which include an optical surface on a part of a surface of a resin molded base material and a void section formed by pressurized fluid injected from the outside into the inside of the base material, and a method for manufacturing said optical elements.

### BACKGROUND OF THE INVENTION

In recent years, in order to increase high image quality and high image fineness, high image recording density has been required for digital devices, such as copy machines and laser beam printers. However, to increase image fineness, various structuring parts are required to exhibit high manufacturing control and accuracy. Concerning an optical element serving as the structuring parts, in order to gather, to polarize, and to transform light rays, ejected from a light source, by transmission and reflection, an optical surface of the optical element is required to be formed with high accuracy. Specifically in recent years, blue laser rays have drawn attention as effective light rays, which have a short wave length, exhibit long life and stable output. Since said blue laser rays can form a very small optical spot, an optical element, having high surface accuracy, has been required to accept said small optical spot.

However, the required surface accuracy becomes high, various matters, which were not so affected, become large technical problems. The largest problem is that the optical surface tends to deform due to warping and sinking resin, which occur when the resin is hardened and contracts during the resin injection molding operation. Specifically, concerning an optical element to which an fθ characteristic is applied, an adverse influence, which is due to the warping resin occurred in the scanning direction, becomes more remarkable, whereby the conventional injection molding method cannot obtain the needed quality of the optical elements exhibiting the high accuracy. Further, as detailed above, when a laser beam of a short wave length, such as a blue laser, is used, weather-proof characteristics ofthe resin molded lens adversely influence on keeping the high surface accuracy.

To overcome this problem, the inventor of the present invention took particular note on effects of an injecting molding work including a void section, and thought that said effects should be applied on optical components. Because when a void section is molded by said injecting molding work, volume shrinkage occurs in the molded resin, which causes warping and sinking on the molded resin, the tensile stress of the resin is released into the void section, and due to this, sinking of resin is generated on the surface of the cavity section, so that warping and sinking, which are generated on the surface of the molded articles, can be effectively eliminated.

As a method, for making a void section in the resin molded articles, a gas assist molding method is well-known, which will be detailed. A molding die is used which has a cavity carrying a molding die surface to form an optical reflective surface. That is, melted thermoplastic resin is injected into the cavity. Pressurized fluid is subsequently introduced into the melted thermoplastic resin in the cavity, through a top of a nozzle protruded into the cavity, whereby a void section is formed (being a step of introducing the pressurized fluid). During a time interval in which the thermoplastic resin in the cavity is solidified and cooled, the pressure in the void section is kept within a predetermined pressure scope (being a step of pressure keeping), the pressurized fluid in the void section is subsequently ejected (being a step of ejecting the pressurized fluid). After that, the molding die is opened, so that an optical reflective member, which is a resin molded article, is separated from the molding die (being a step of separating).

Since provided are the above detailed steps of introducing the pressurized fluid, keeping the pressure, and ejecting the pressurized fluid, warping, generated on the surface ofthe molded articles, is released, and accuracy of the optical surface of the molded articles can be effectively increased (see Patent Document 1).

### DOCUMENTS OF PRIOR ART

### PATENT DOCUMENT

Patent Document 1: Unexamined Japanese Patent Application Publication Number 2001-105449

### SUMMARY OF THE INVENTION

### PROBLEMS TO BE SOLVED BY THE INVENTION

In the technology described in Patent Document 1 as a molding device for injecting the pressurized fluid, a structure of a molding device is disclosed which carries a nozzle in a molding die, which serves as a movable molding die. In this case, when a produced molded article is separated from the molding die, adverse separation resistance is generated. This separation resistance is not detailed in the molding device of Patent Document 1. Concerning the optical element which requires high accuracy on the optical surface, as detailed in the present invention, the separation resistance, generated due to the above structure, tends to generate an adverse affect onto the optical surface, whereby it is very difficult to use said technology without mechanical improvement.

In order to solve the above described problem, the present invention is achieved, and objects of the present invention is to ofter a manufacturing device of resin molded articles for use in optical elements, and a method for manufacturing the optical element, wherein though an irregular shape, such as a nozzle, is provided in the molding die, the manufactured article, as the resin molded article, is effectively separated from the molding die, and its optical characteristic is not adversely influenced.

### MEANS TO SOLVE THE PROBLEM

In order to solve the above problem, Embodiment 1 of the present invention is a device for manufacturing resin molded articles for use in optical elements, wherein the resin molded article includes: an optical surface on a part of a base material which is farmed of resin, and a void section in the base material, wherein the device is characterized in that: a first molding die which is arranged to be stationary; a second molding die which is arranged to be movable in a closing direction to join to the first molding die or in an opening direction to release the first molding die, wherein the second molding die, which is provided to form a cavity by joining to the first molding die, includes a transfer surface for transferring the optical surface onto melted resin injected into the cavity, said transfer surface is included in the molding die surface of the cavity, a nozzle which is provided on the molding die surface of the cavity, other than the transfer surface of the second molding die, wherein the nozzle is configured to form the void section when pressurized fluid is injected into the melted resin having been ejected in the cavity, wherein the nozzle includes a top section which is configured to protrude from the molding die surface into the cavity, and an ejector pin which is provided on the second molding die, wherein the ejector pin is configured to protrude from the molding die surface of the second molding die so that the base material is separated from the molding die surface, wherein an ejecting position of the ejector pin is arranged between a position where the base material corresponds to the top section of the nozzle and an end section of the optical surface which is at a side where the top section of the nozzle is arranged.

Embodiment 2 of the present invention is the device for manufacturing the resin molded articles for use in optical elements relating to Embodiment 1, wherein the second embodiment is characterized in that plural ejector pins are arranged around the nozzle.

Embodiment 3 of the present invention is the device for manufacturing the resin molded articles for use in optical elements relating to Embodiment 1 or 2, wherein the third embodiment is characterized in that the nozzle is formed to be a shaft, and the top section of the nozzle is formed to be a taper shape, whose external diameter gradually varies to be greater from the external diameter of the shaft, from the top of the nozzle toward a base side of the nozzle.

Embodiment 4 of the present invention is the device for manufacturing the resin molded articles for use in optical elements relating to any one of Embodiments 1 - 3, wherein the device is characterized in that the top section of the nozzle is covered with a coating film.

Embodiment 4 of the present invention is a method for manufacturing an optical element, the method is characterized in that the optical element is formed in such ways that: melted resin is injected into a cavity which is formed due to joining a second molding diebeing movable to a first molding die arranged to be stationary, a void section is formed by pressurized fluid injected through a nozzle into the melted resin, an optical element, whose partial surface includes an optical surface, is formed by injection, and after the optical element is formed, an ejector pin is protruded toward the optical element, so that the optical element is separated from the molding die, wherein the method for manufacturing the optical element comprises the steps of: injecting the melted resin into the cavity; injecting the pressurized fluid through the top section of the nozzle arranged on the second molding die into the melted resin injected into apart of the cavity; and separating the formed optical element having the void section which is formed by the step of injecting the pressurized fluid, from the second molding die by the ejector pin which is protruded between a position of the optical element corresponding to the top section of the nozzle and an end section of the optical surface which is at a side where the top section of the nozzle is arranged.

### EFFECT OF THE INVENTION

According to the present invention, since the transfer surface and the nozzle are provided on the second molding die, the separation resistance, which is generated when the base material is separated from the second molding die, becomes greater the separation resistance, which is generated when the base material is separated from the first molding die, whereby the base material can be easily separated from the first molding die. Further, the ejector pin is provided on the second molding die, and a top surface of the ejector pin is protruded from the molding die surface of the cavity, whereby the base material can be easily separated from the second molding die. Still further, since the top surface of the ejector pin protrudes from the molding die surface which is an intermediate section between the top section of the nozzle and the transfer surface, the base material can be easily separated, from not only the top section of the nozzle but also the transfer surface, whereby the deformation due to the separation resistance is not generated on the optical surface of the base material, so that the manufacturing accuracy of the optical surface of the base material is prevented from being decreased.

### BRIEF DESCRIPTION OF THE DRAWINGS

Fig. 1 is a top view of an fθ mirror relating to an embodiment of the present invention.
Fig. 2(a) is partial front view of the fθ mirror. Fig. 2(b) is a cross sectional view which is viewed from line IIb-IIb in Fig. 2(a), Fig. 2(c) is a cross sectional view which is viewed from line IIc-IIc in Fig. 2(a), and Fig. 2(d) is a cross sectional view which is viewed from line IIb -IIb in Fig. 2(a).
Fig. 3 is a front view of an injection molding device relating to an embodiment of the present invention.
Fig. 4 is a partial front view of the injection molding device.

### DETAILED DESCRIPTIONS OF THE PREFERRED EMBODIMENT

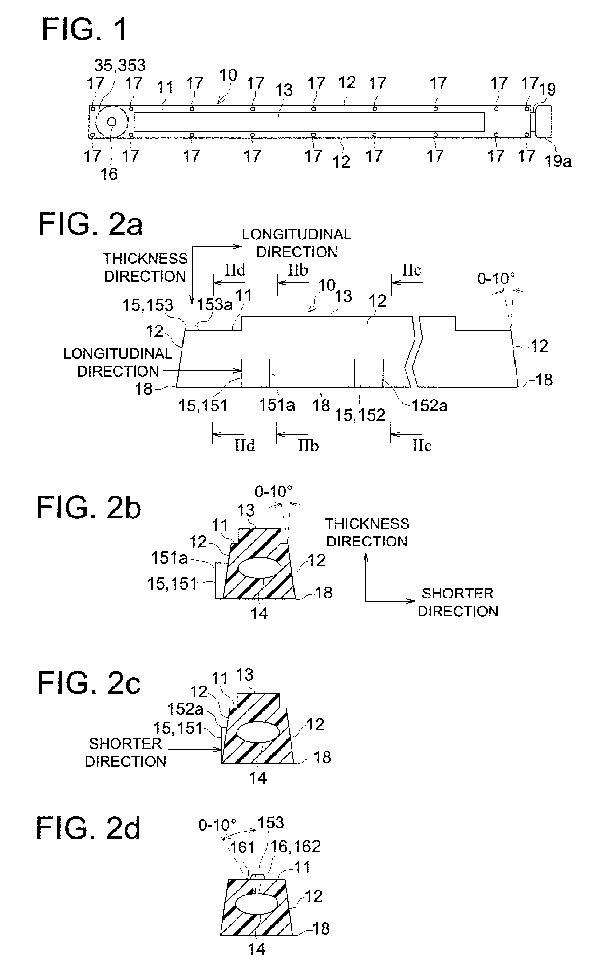

The embodiments of the present invention will now be detailed while referring to the drawings. Figs. 1 - 4 show an embodiment of the present invention.

### (Resin molded articles for use in optical elements)

Firstly, resin molded articles for use in optical elements, which are to be manufactured by an injection molding device relating to the embodiment ofthe present invention, will now be detailed. The resin molded articles for use in optical elements are preferable optical elements which are used for various purposes, such as electrical products, automobile components, medical devices, protective devices, building products, and household products, which strongly require specularity, dimensional accuracy, lightweight property, safety, decay durability, and economic efficiency.

As an example of the optical elements relating to the present invention, there is fθ mirror 10, mounted on a laser scanning optical device, which receives light rays emitted from a light source, and gathers said light rays onto a polygon mirror, while the polygon mirror is rotating at a predetermined speed to scan the light rays, so that the scanned light rays can exhibit an fθ characteristic.

Subsequently, an fθ mirror will now be detailed while referring to Fig.1 and Fig. 2. Fig. 1 is a top view of the fθ mirror relating to an embodiment of the present invention, Fig. 2(a) is partial front view of the fθ mirror, Fig. 2(b) is a cross sectional view which is viewed from line IIb -IIb in Fig. 2(a), Fig. 2(c) is a cross sectional view which is viewed from line IIc -IIc in Fig. 2(a), and Fig. 2(d) is a cross sectional view which is viewed from line IIb-IIb in Fig. 2(a).

Fθ mirror 10 includes a base material, being a long plate, optical surface (being a mirror section) 13, positioned on one of surface 11 of the base material, and void section 14, positioned inside the base material on the reverse surface of optical surface 13. The longitudinal length of void section 14 is longer than the longitudinal length of optical surface 13, and both ends of void section 14 are formed at the outer side of both ends in the longitudinal direction of optical surface 13, whereby the tensile stress generated by the contraction due to curing resin, is released onto void section 14, so that longitudinal warp due to the volume contraction is reduced on the total area of optical surface 13, and the surface irregularity is avoided.

According to conventional technology, due to volume contraction of resin, manufactured molded articles tend to hold the molding dies, so that optical surface 13 is deformed by the separation resistance. However, since optical surface 13 was made to protrude in the thickness direction from the base material across the total plate surface, optical surface 13 could be controlled not to deform. It is preferable that surface roughness Ra of optical surface 13 is formed under a limit of"Ra≤ 5 (mn)". Due to this limit, it becomes possible to obtain a surface accuracy which can be used for short wave lengths of less than 500 nm, for example. Further, it is more preferable under a limit of"2 (nm) < Ra ≤ 5 (nm)".

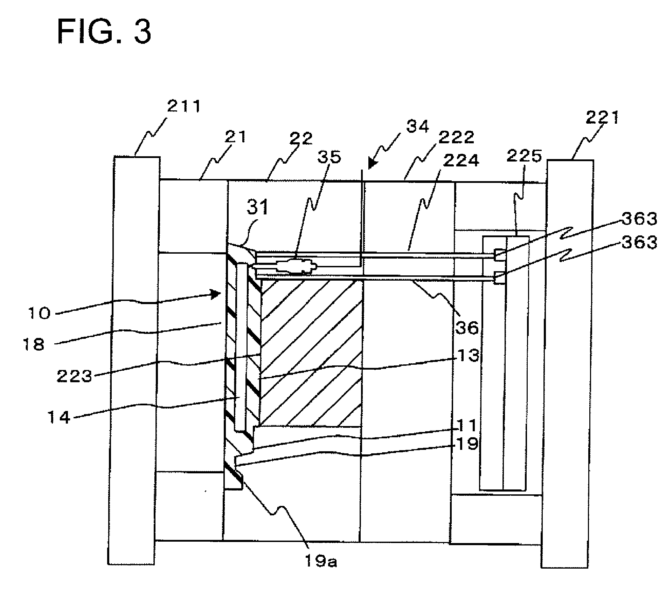

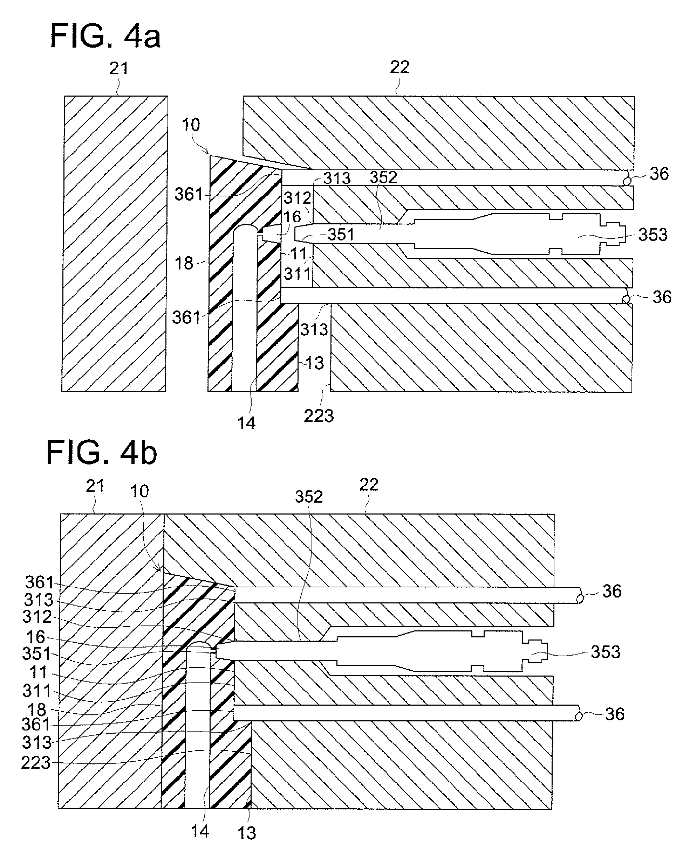

Peripheral wall 12 of fθ mirror 10 is formed to exhibit a draft angle. Since the draft angle is formed on molding die surface 311 of cavity 31 of second molding die 22 (see Figs. 3 and 4), when fθ mirror 10 is separated from second molding die 22, the separation resistance is decreased, still further, optical surface 13 of fθ mirror 10 can be prevented from being deformed or distorted. Still further, durability of the molding dies can be improved. The draft angle in this case is determined, based on the materials and the thickness (being dimension af the thickness shown in Fig. 2(a)) of fθ mirror 10, and it is preferable that the draft angle is determined to be equal to 1-10 degrees.

Concerning fθ mirror 10, position determining section 15 is included for installing the laser scanning optical device at a predetermined position in fθ mirror. Position determining section 15 includes longitudinal position determining section 151, shorter directional position determining section 152, and thickness-directional position determining section 153 (which is perpendicular to the longitudinal and shorter directions). Longitudinal position determining section 151, which is formed on peripheral wall 12 of fθ mirror 10, is shown in Figs. 2(a) and 2(b). Shorter directional position determining section 152, which is formed on peripheral wall 12 of fθ mirror 10, is shown in Figs. 2(a) and 2(c), Thickness directional position determining section 153, which is formed on an edge section in the longitudinal direction on surface 11 of the base material, is shown in Figs. 2(a) and 2(d).

Longitudinal position determining section 151 represents a protruding section which protrudes 2 - 3 mm from peripheral wall 12 in the shorter direction, and the protruding section includes paired side surfaces 151 a, being perpendicular to the longitudinal direction.

Shorter directional position determining section 152 represents a protruding section which protrudes 0.2 - 0.5 mm from peripheral wall 12 in the shorter direction, and the protruding section includes top surface 152a, being perpendicular to the shorter direction.

Thickness directional position determining section 153 represents a protruding section which protrudes 0.2 - 0.5 mm from surface 11 of the base material (excluding optical surface 13) in the shorter direction, and the protruding section includes top surface 153a, being perpendicular to the thickness direction.

In Fig. 1, peripheral wall 12 of fθ mirror 10, from which each position determining section 15 has been removed, is shown.

Side surface 151 a of longitudinal position determining section 151, top surface 152a of shorter directional position determining section 152, and top surface 153a of thickness directional position determining section 153 are individually arranged to come into contact with predetermined positions of the laser scanning optical device, whereby fθ mirror 10 can be installed on a predetermined position of the laser scanning optical device.

Further, fθ mirror 10 includes nozzle track 16 which is a track, transferred by top section 351 of gas nozzle 35, and ejector pin track 17 which is a track, transferred by top portion surface 361 of ejector pin 3 6.

Nozzle track 16 and ejector pin track 17 are formed on a surface (which is other than optical surface 13) of one side on which optical surface 13 is formed from parting line track 18, which is surface 11 of the base material. Parting line track 18 represents a track of a joining surface of the first molding die and the second molding die. Nozzle track 16 is shown in Fig. 2(d), while ejector pin track 17 is shown in Fig. 1.

Nozzle track 16 is provided on an end section in the longitudinal direction, of surface 11 which is stepped down from optical surface 13 of the base material. Nozzle track 16 is formed to be a circular groove, including opening section 161 exhibiting a 5mm diameter, and bottom section 162 exhibiting a smaller diameter than opening section 161. Nozzle track 16 leads to one end of void section 14. Nozzle track 16 is formed as a shape which is transferred from the shape of top section 351 of gas nozzle 35. Nozzle track 16 includes a draft angle. Due to the draft angle formed on top section 351 of gas nozzle 35, if top section 351 of gas nozzle 35 and nozzle track 16 of fθ mirror 10 are slightly separated from each other, nozzle track 16 separates from top section 351 of gas nozzle 35, whereby the separation resistance of nozzle track 16 is decreased, and deformation and distortion of the optical surface, adjacent to nozzle track 16, can be prevented. Further, durability of the molding dies can be improved. Considering that nozzle track 16 may hold top section 351 of gas nozzle 35, the diameter of the draft angle is preferably equal to or greater than 1 degree, while considering that the diameter of nozzle 35 should not be greater than necessary, the diameter of the draft angle is preferably equal to or less than 10 degrees. The shape and the arrangement of gas nozzle 35 will be detailed later.

Ejector pin track 17 is provided on surface 11, which is lowered by one step from optical surface 13, of the base material, that is, plural ejector pin tracks 17 are arranged at an equal interval around nozzle track 16, and are arranged at a predetermined interval around optical surface 13. In this case, ejector pin tracks 17 are formed on surface 11 of the base material between optical surface 13 and nozzle track 16. Each ejector pin track 17is formed to be a line of a circle with a diameter of about 2 mm. Each ejector pin track 17 is formed to be a shape transferred from the shape (being a circular shape with the external diameter of about 2 mm) of top portion surface 361 af ejector pin 36. The shape and the arrangement of ejector pin 36 will be detailed later.

When fθ mirror 10 has been separated, fθ mirror 10 is combined with pouring gate shaped resin 19, which is formed of the melted resin filled in the pouring gate, and runner shaped resin 19a, which is formed of the melted resin filled in runner 322 through pouring gate shaped resin 19. It is also possible that above-detailed nozzle track 16 and ejector pin track 17 are formed on a surface of runner shaped resin 19a. Also in this case, ejector pin track 17 is formed on surface 11 of the base material between optical surface 13 and nozzle track 16. Further, nozzle track 16 and ejector pin track 17 are formed on a surface of one side on which optical surface 13 is formed from parting line track 18.

Parting line track 18 represents a track of a joining surface (which is a joining surface of first molding die 21 and second molding die 22, which will be detailed later), and is formed to be the form of a line. Parting line track 18, which is formed at the lower end (which is surface 11 being opposite against surface 11 of the base material carrying optical surface 13) of peripheral wall 12 of fθ mirror 10, is shown in Fig. 2(a).

### (Injection Molding Device)

An injection molding device (being a device for manufacturing a resin molded article for use of an optical element) for manufacturing a base material of fθ mirror 10 will now be detailed, while referring to Fig. 3 and Fig. 4. Fig. 3 is a front view ofthe injection molding device in which melted resin filled in cavity 31 is cut in the longitudinal direction, while Fig. 4 is a partial front view to show first molding die 21, second molding die 22, gas nozzle 35, and ejector pin 36.

The injection molding device includes a molding die tarrying cavity 31, a filling means (which is not illustrated) for filling the melted resin in cavity 31, gas injecting means 34 for injecting pressurized gas (being pressurized fluid) into the melted resin having been filled, and a control means (which is not illustrated) for controlling the operation for filling the melted resin, the operation for stopping filling of the melted resin, the operation for starting the injection of the pressurized gas, the operation for stopping the injection of the pressurized gas, and the operation for releasing the pressurized gas from the void section.

### (Molding Die)

A molding die includes first molding die 21, and second molding die 22, wherein said second molding die 22 is configured to be movable to come close to first molding die 21 and to clamp first molding die 21, or to separate from first molding die 21 to obtain a base material. Cavity 31, a runner (which is not illustrated), and a spur (which is also not illustrated) are formed in first molding die 21 and second molding die 22, both having been clamped to each other.

The pouring pouring gate, the runner and the spur are successively formed in cavity 31. A heater (which is not illustrated) is provided along cavity 31, the runner and the spur (which is a route of the molding die). The heater prevents the melted resin, which is in contact with cavity 31 and the route of the molding die, from cooling due to thermal conduction, loosing liquidity, and from solidifying. Instead of said heater, a water channel for controlling the temperature can be provided on the molding die.

First molding die 21 is mounted on first molding die mounting plate 211. Second molding die 22 is mounted on second molding die mounting plate 221 via receiving plate 222. Second molding die 22 includes transfer surface 223 which transfers optical surface 13 onto the melted resin, injected into cavity 31. In order to obtain surface roughness Ra ≤ 55 (nm)" of optical surface 13, transfer surface 223 is formed by the cutting process, so that surface roughness Ra is equal to or less than 5 rum.

Gas nozzle 35 is provided on second molding die 22. Gas nozzle 35 includes top section 351, which passes through penetrating hole 312 formed in molding die surface 311 of cavity 31 other than transfer surface 223, and protrudes into cavity 31. Gas nozzle 35 forms void section 14, by injecting the pressurized gas through top section 351 into the melted resin, filled in cavity 31.

Gas nozzle 35 is formed to be a shaft shape. Gas nozzle 35 includes top section 351, which is gradually tapered from an approximate external diameter of 5 mm to be a smaller diameter, shaft section 352, which has an approximate external diameter of 5 mm, and base section 353 which has an approximate external diameter of 18 mm. Fig. 4 shows top section 351 of gas nozzle 35, wherein top section 351 is tapered from the top to the base section so that the external diameter gradually increases. A draft angle, being 1-10 degrees, is applied on top section 351 of gas nozzle 35. Since the draft angle is applied on top section 351 of gas nozzle 35, the separation resistance of nozzle track 16 is decreased, so that the optical surface of and near nozzle track 16 can be prevented from being deformed or distorted, which has been detailed above. Further, the durability of the molding die can be improved

Top section 351 of gas nozzle 35 is covered with a coating film. As such coating films, listed are an alloy film in the platinum system, a diamond-like carbon film, a titanium nitride film, and a chrome oxide film, and as a coating film for improving the oxidation resistance, a noble metal film is listed, for example.

AS coating processes to be conducted on top section 3 51 of gas nozzle 35, listed are metallic coating processes, such as electroplating, diffusion plating, evaporation plating, non-electrolytic plating, and thermal spraying, and nonmetallic coating processes of ceramic coating, conducted by CVD, PVD, ion plating, sputtering, and vacuum deposition, or combined coating processes of the same. In detail, listed are electrolytic plating and non-electrolytic plating using a hard chrome, and ceramic coating processes using titanium nitride (TiN), chromium nitride (CrN), and titanium aluminum nitride (TiAlN).

Ejector pin 36 is provided on second molding die 22. Ejector pin 36 is formed to be a shaft shape, exhibiting an approximate diameter of 2 mm. Insertion holes 313 Far inserting ejector pin 3 6 are formed at four points on molding die surface 31 of cavity 31 of the second molding die. Two of the insertion holes among the four insertion holes 313 are formed at regular intervals on the periphery of base section 353 (being shown by dashed lines in Fig. 1) of gas nozzle 35. Other two insertion holes 313 are formed around top section 351 of gas nozzle 35 on transfer surface 223 opposite molding die surface 311. Further, four insertion holes 224, corresponding to four insertion holes 313, are formed on receiving plate 222.

By the above-described arrangement of insertion holes 313, four ejector pins 36 can be arranged at equal interval around base section 353 (being shown by dashed lines in Fig. 1) of gas nozzle 35, and two of the four ejector pins 36 are formed on molding die surface 311 of cavity 31 between top section 351 of gas nozzle 35 and transfer surface 223. Instead of this arrangement, more than one ejector pins 36 are effectively formed on molding die surface 311 of cavity 31 between top section 351 of gas nozzle 351 and transfer surface 223.

Between second molding die mounting plate 221 and receiving plate 222, ejector plate 225 is arranged. Ejector plate 225 is supported by an urging means, so that ejector pin 225 can be at a predetermined distance from receiving plate 222.

Concerning the base side of ejector pin 36, base section 363 of ejector pin 36 is arranged to penetrate insertion hole 313 and insertion hole 224, so that ejector pin 36 is fixed on ejector plate 225. When second molding die 22 approaches first molding die 21 to be clamped to each other, top portion surface 361 of ejector pin 36 is submerged so that insertion hole 313 is closed, whereby top portion surface 361 is structured to be a portion of molding die surface 311 of cavity 31.

When second molding die 22 is separated from first molding die 21, second molding die 22 is separated from first molding die 21 with receiving plate 222, ejector plate 225, and ejector pin 26. Further, when second molding die 22 has been separated from first molding die 21 at a predetermined distance, ejector plate 225 comes into contact with second molding die mounting plate 221, whereby ejector plate 225 and ejector pin 36 move relatively against second molding die 22, and top portion surface 361 of ejector pin 36 protrudes from molding die surface 311 into cavity 31, so that fθ mirror 10 is separated from second molding die 22. A protruding position of ejector pin 36 is arranged between a position corresponding to the top section of gas nozzle 35 and the end position of the optical surface of fθ mirror 10 which is near the top section of gas nozzle 35.

Fig. 3 and Fig. 4 show base section 363 of ejector pin 36 which is fixed on ejector plate 225, and top portion surface 361 which is structured to be a part of molding die surface 311. Fig. 4(a) shows top portion surface 361 of ejector pin 36, in which second molding die 22 has been separated from first molding die 21. Fig. 4(b) shows top portion surface 361 of ejector pin 36, in which second molding die 22 approaches first molding die 21.

A means for injecting the melted resin into cavity 31, and a means for injecting the pressurized gas into the injected melted resin will now be detailed below.

### (Filling Means)

It is desirable for the operation that the filling means is arranged on the molding die so that the melted resin is injected from the shorter side in the longitudinal direction of fθ mirror 10. In Fig. 1, the shorter side of fθ mirror 10 is arranged to face the bottom of cavity 31.

An ejecting outlet of the filling means, which is not illustrated, is connected to the spur (which is a route of the molding die) for ejecting the melted resin from the ejecting outlet. The filling means includes a screw (which is not illustrated) for pushing out the melted resin. The screw pushes out the melted resin from the ejecting outlet through the spur, the runner, and the pouring gate, so that the melted resin fills cavity 31.

### (Gas Injecting Means)

Gas injecting means 34 includes a gas tank to accommodate the pressurized gas (which is not illustrated), an electromagnetic valve (which is not illustrated), and gas nozzle 35. Top section 351 of gas nozzle 35 includes an injection section which leads to cavity 31. The control section controls to open or close the electromagnetic valve (which is not illustrated). The pressurized gas can be used as long as it does not react or combine with the resin. For example, inactive gas can be listed. From the points of view of the safety and cost, nitrogen gas is more preferable to use.

### (Control Means)

When the top of the melted resin to be filled into the void section reaches a predetermined position, the control section receives a detected signal, and starts an injecting operation to inject the pressurized gas into the filled melted resin. Further, when a predetermined time interval has passed after the start of injection, the control means stops the injecting operation.

### (Materials for Resin Molded Articles for Use in Optical Elements)

The materials for fθ mirror 10 will now be detailed. For the resin materials to structure the base material of fθ mirror 10, listed are, for example, polycarbonate, polyethylene terephthalate, polymethylmethacrylate, and cycloolefin polymer, or resin structured ofmore than two of the above listed materials. It is more preferable to use polycarbonate and cycloolefin polymer for fθ mirror 10.

The materials to structure optical surface 13 of fθ mirror 10 will now be detailed. As the materials to structure optical surface 13, listed are, for example, silicon monoxide, silicon dioxide, and alumina. As the film formation method, well known methods can be used, such as a vacuum evaporation method, a sputtering method, and an ion plating method.

### (Manufacturing Method)

The manufacturing method of fθ mirror 10 will now be detailed.

Before the melted resin is filled into cavity 31 of the molding die, second molding die 22 is moved to approach first molding die 21, so that both molding dies 21 and 22 are clamped to each other, whereby cavity 31 is formed. In this time, top section 351 of gas nozzle 35 protrudes into cavity 31 through penetrating 312, whereby top section 351 becomes a part of molding die surface 311. Top portion surface 361 of ejector pin 36 is placed into insertion hole 313, so that top portion surface 361 is smoothly connected to the edge of insertion hole 313, whereby top portion surface 361 becomes a part of molding die surface 311 (see Fig. 4(b)). A cylinder of the filling means (which is not illustrated) is set to become a predetermined melting temperature. The control means controls the electromagnetic valve to close. The control means controls the filling means to rotate the screw, so that the melted resin is injected from the ejecting outlet of the filling means (which is a melted resin injection process), whereby the melted resin is filled into cavity 31, through the spur, the runner, and the pouring gate.

The melted resin is moreover filled into cavity 31. The top of the filled melted resin reaches the predetermined position, causing a detected signal. Subsequently, the control means controls the filling means based on the detected signal, so that the filling operation to fill the melted resin into cavity 31 is stopped. Subsequently, the control means controls gas injecting means 34 to open the electromagnetic valve. Due to this opening action, the pressurized gas accommodated in the gas tank (which is not illustrated) is jetted into cavity 31 through top section 351 of gas nozzle 35.

The pressurized gas is jetted into the filled melted resin in the longitudinal direction (which is a pressurized gas injecting step). Due to this jetting action, a void section, which is prolonged in the longitudinal direction, can be created within the melted resin. Further, when the top of the melted resin reaches the predetermined position, the filling operation of the melted resin is stopped due to the detected signal.

In the next step, the melted resin is cooled and solidified by the thermal conduction to the molding die. During the cooling and solidification step, void section 14 is controlled to be under a predetermined pressure (which is a pressure keeping step). By the pressure keeping step, the surface of the base material is pressed against the transfer surface, so that the transferring action of the surface of the base material improves. During the steps from the gas injecting step to the pressure keeping step, optical surface 13 is created on the surface of the base material. After that, the pressurized gas in the void section 14 is released, and the molding die is opened, subsequently, fθ mirror 10 is taken out as a resin molded article.

A mold opening operation, which is an operation to separate second molding die 22 from first molding die 21, will now be detailed. Since transfer surface 223 and gas nozzle 35 are provided on second molding die 22, when second molding die 22 is separated from first molding die 21, the separation resistance of fθ mirror 10 against second molding die 22 becomes greater than that against first molding die 21, so that fθ mirror 10 moves with second molding die 22. Optical surface of fθ mirror 10 adheres onto transfer surface 223 of second molding die 22, and nozzle track 16 of fθ mirror 10 adheres on top section 351 of gas nozzle 35.

When second molding die 22 is further separated from first molding die 21, ejector plate 225 comes into contact with second molding die mounting plate 221, whereby top portion surfaces 361 of plural ejector pins 36, which are arranged around transfer surface 223 at a predetermined interval, protrude from molding die surface 311 of cavity 31 (which is a separation step). Further, top portion surfaces 361 of four ejector pins 36 protrude, which are arranged around base section 353 of gas nozzle 35 at approximately regular intervals. Accordingly, fθ mirror 10 can be separated from second molding die 22 (see Fig. 4(a)).

Among top portion surfaces 361 of four ejector pins 36, top portion surfaces 361 of two ejector pins 36 are included, which are arranged on molding die surface 311 which exists between top section 351 of gas nozzle 35 and transfer surface 223, whereby fθ mirror 10 can easily be separated from top section 351 and transfer surface 223, and no distortion due to the separation resistance is generated on optical surface 13 of fθ mirror 10, so that it is possible to ensure the accuracy of optical surface 13 of fθ mirror 10. Further, the distortion, which is generated due to the separation resistance between fθ mirror 10 and top section 351 of gas nozzle 35, is not conducted to optical surface 13, so that it is possible to ensure the accuracy of optical surface 13 of fθ mirror 10.

Still further, top section 351 of gas nozzle 35 is tapered, and its draft angle is 1―10 degrees, so that the separation resistance, which is applied to fθ mirror 10 from top section 351 of gas nozzle 35, can be reduced. Still further, since top section 351 of gas nozzle 35 is covered with the coating film, top section 351 of gas nozzle 35 exhibits easy separation characteristics, whereby the separation resistance, which is applied to fθ mirror 10 from top section 351 of gas nozzle 35, can be reduced.

Concerning fθ mirror 10 which is separated from second molding die 22, since position determining section 15, nozzle track 16, and ejector pin track 17 are formed on surface 11 of the base material, other than optical surface 13, accuracy af optical surface 13 cannot be reduced.

### EXPLANATION OF THE ALPHA NUMERICAL SYMBOLS

- 10: fθ mirror
- 11: surface of base material
- 12: peripheral wall
- 13: optical surface
- 14: void section
- 15: position determining section
- 151: longitudinal position determining section
- 151a: paired side surfaces
- 152: shorter directional position determining section
- 152a: top surface
- 153: thickness-directional position determining section
- 153a: top surface
- 16: nozzle track
- 161: opening section
- 162: bottom section
- 17: ejector track
- 18: parting line track
- 19: pouring gate shaped resin
- 19a: runner shaped resin
- 21: first molding die
- 211: first molding die mounting plate
- 22: second molding die
- 221: second molding die mounting plate
- 222: receiving plate
- 223: transfer surface
- 224: insertion hole
- 225: ejector plate
- 31: cavity
- 311: molding die surface of cavity
- 312: penetrating hole
- 313: insertion hole
- 34: gas injecting means
- 35: gas nozzle
- 351: top section of gas nozzle
- 352: shaft section of gas nozzle
- 353: base section of gas nozzle
- 36: ejector pin
- 361: top portion surface of ejector pin

## Claims

1. A device for manufacturing resin molded articles for use in optical elements,
wherein the resin molded article includes:
an optical surface on a part of a base material which is formed ofresin, and
a void section in the base material,
wherein the device comprises:
a first molding die which is arranged to be stationary;
a second molding die which is arranged to be movable in a closing direction to join to the first molding die or in an opening direction to release the first molding die, wherein the second molding die, which is provided to form a cavity by joining to the first molding die, includes a transfer surface for transferring the optical surface onto melted resin injected into the cavity, said transfer surface is included in the molding die surface of the cavity,
a nozzle which is provided on the molding die surface of the cavity, other than the transfer surface of the second molding die, wherein the nozzle is configured to form the void section when pressurized fluid is injected into the melted resin having been ejected in the cavity, wherein the nozzle includes a top section which is configured to protrude from the molding die surface into the cavity, and
an ejector pin which is provided on the second molding die, wherein the ejector pin is configured to protrude from the molding die surface of the second molding die so that the base material is separated from the molding die surface, wherein an ejecting position of the ejector pin is arranged between a position where the base material corresponds to the top section of the nozzle and an end section of the optical surface which is at a side where the top section of the nozzle is arranged.

2. The device for manufacturing the resin molded articles for use in the optical elements of claim 1, wherein plural ejector pins are arranged around the nozzle.

3. The device for manufacturing the resin molded articles for use in the optical elements of claim 1 or 2, wherein the nozzle is formed to be a shaft, and the top section of the nozzle is formed to be a taper shape, whose external diameter gradually varies to be greater from the external diameter of the shaft, from the top of the nozzle toward a base side of the nozzle.

4. The device for manufacturing the resin molded articles for use in the optical elements of any one of claims 1 - 3, wherein the top section of the nozzle is covered with a coating film.

5. A method for manufacturing optical elements which are formed in such ways that
melted resin is injected into a cavity which is formed due to joining a second molding die being movable to a first molding die arranged to be stationary,
a void section is formed by pressurized fluid injected through a nozzle into the melted resin, an optical element, whose partial surface includes an optical surface, is formed by injection,
and
after the optical element is formed, an ejector pin is protruded toward the optical element, so that the optical element is separated from the molding die,
wherein the method for manufacturing the optical element comprises the steps of
injecting the melted resin into the cavity;
injecting the pressurized fluid through the top section of the nozzle arranged on the second molding die into the melted resin injected into a part of the cavity; and
separating the formed optical element having the void section which is formed by the step of injecting the pressurized fluid, from the second molding die by the ejector pin which is protruded between a position of the optical element corresponding to the top section of the nozzle and an end section of the optical surface which is at a side where the top section of the nozzle is arranged.
